Europäisches Patentamt

(19) European Patent Office

Office européen des brevets

(11) Publication number: **0 049 290**
**B1**

## (12) EUROPEAN PATENT SPECIFICATION

(45) Date of publication of patent specification: **04.12.85**

(21) Application number: **81901154.5**

(22) Date of filing: **15.04.81**

(86) International application number:
**PCT/DK81/00040**

(87) International publication number:
**WO 81/03005 29.10.81 Gazette 81/25**

(51) Int. Cl.⁴: **B 65 B 61/10,** B 65 B 67/10,
B 26 F 3/12

(54) **PACKING MACHINE SUCH AS A PACKING TABLE FOR WRAPPING UP GOODS IN A PLASTICS FOIL.**

(30) Priority: **16.04.80 DK 1617/80**

(43) Date of publication of application:
**14.04.82 Bulletin 82/15**

(45) Publication of the grant of the patent:
**04.12.85 Bulletin 85/49**

(84) Designated Contracting States:
**AT CH DE FR GB LI NL SE**

(56) References cited:
**DE-A-1 778 394**
**DE-B-2 641 894**
**US-A-4 072 848**

(73) Proprietor: **MICHAELSEN, Ole Voldby**
**Dalagervej 200**
**DK-8700 Horsens (DK)**

(72) Inventor: **MICHAELSEN, Ole Voldby**
**Dalagervej 200**
**DK-8700 Horsens (DK)**

(74) Representative: **Coleman, Stanley et al**
**MATHYS & SQUIRE 10 Fleet Street**
**London EC4Y 1AY (GB)**

Courier Press, Leamington Spa, England.

# Description

The present invention relates to a packing machine such as a packing table for wrapping up goods in a plastics foil taken off from a supply, and where provision is made of a heatable tear-off edge in the form of a heating rod having a heating body and temperature control means for separating from the supply, by thermal action on the foil, a piece of foil to be used for the wrapping. Such a machine is known from DE—A—1.778.394 which employ a heating wire or heating rod for cutting the foil pieces used for wrapping up the individual articles.

The heating wire or rod which acts as a cutting or tear-off edge is a resistance wire or a hollow rod provided with a resistance heating element of conventional type heated by passage of current, and when the foil which for instance is drawn in the desired lengths from a supply roller is brought into contact with the heating wire, it will be separated or cut at the area of contact as a result of the decomposing action of the heat on the plastics material.

The temperature at which the heating wire or rod acts on the plastics foil is, however, very critical. If the temperature is too low, the cutting effect will be insufficient and if it is too high, the decomposition of the plastics material may result in a combustion producing vapours and/or gases and also in many cases, ashes, which is troublesome and sometimes detrimental to the operator of the machine and, in any case, unacceptable when the packing machine is used for wrapping up articles of food, e.g. meat products, which may be contaminated thereby. Known packing machines of the type in question are therefore provided with complicated control circuits to ensure that the correct temperature of the heating wire or rod is kept accurately, which is however extremely difficult to achieve with an ordinary resistance wire or resistance heating element which is, moreover, cooled each time the plastics foil is cut, this taking place at varying intervals, whereafter the heating wire or rod will have to be rapidly brought back to the desired temperature but not above this, so that in many cases, in particular in machines for wrapping up articles of food, the control circuits require accurate and quick-acting temperature sensors or some other sensitive equipment.

US—Patent Specification No. 3947656 describes a heating rod having nickel-chrome resistance coils as heating elements which are encapsulated by a metallic sheath. The inside of the sheath is in contact with a thermistor arranged within the sheath and serving as a sensor which is in connection with an electric circuit, which interrupts the current to the heating elements when the temperature of the sheath reaches a pre-set level. The electric control circuit comprises a comparator-detector with its own current supply and a triac, which is triggered by the comparator-detector is dependence on the temperature of the thermistor to allow or shut off the passage of current through the heating element.

These control circuits complicate the packing machines and make them more expensive and at the same time more vulnerable to damages and defects, so that regular periodic controls are necessary.

The invention has for its object to provide a packing machine of the kind set forth in DE—A—1.778.394 which prevents effectively the formation of injurious gases or vapours, when plastics foil lengths are cut or torn off by thermal action thereon and which therefore can also be used for packing articles of food, said machine being nevertheless of simple, cheap and robust construction, so that it can stand a rough treatment.

The machine according to the invention is characterised in that the temperature control means are provided by the heating body proper including PTC elements forming it or being inserted thereinto.

The invention utilises the fact that whereas the resistance/temperature characteristic of ordinary resistance materials is practically continuous, this characteristic shows for PTC materials, which are ceramic materials on the basis of barium titanate, an abrupt and very steep increase at a definite temperature, the so-called Curie temperature, the level of which can be adjusted when preparing the material, the resistance value increasing very strongly when the temperature exceeds this Curie temperature. The passage of current is thereby limited correspondingly and the production of heat connected therewith too, so that a temperature balance is established at the Curie temperature. When using a PTC material whose Curie temperature has precisely the value adequate to the purpose, or when using a suitable number of PTC elements spaced from one another at an appropriate distance which can be determined experimentally, it is thus possible to obtain at the tear-off edge a constant temperature at which the plastics material to be cut is not burnt but decomposes without producing gases or vapours, no special circuits or temperature sensors being required for keeping this temperature constant. Due to the properties of the PTC material, no special demands are made either regarding feed voltage stability.

The invention will in the following be explained in more detail with reference to the accompanying drawing in which

Fig. 1 shows a packing table having a tear-off edge in the form of a heating rod according to the invention,

Fig. 2 the heating rod dismounted from the packing table shown in Fig. 1, and

Fig. 3 a sectional view of the heating rod of Fig. 2.

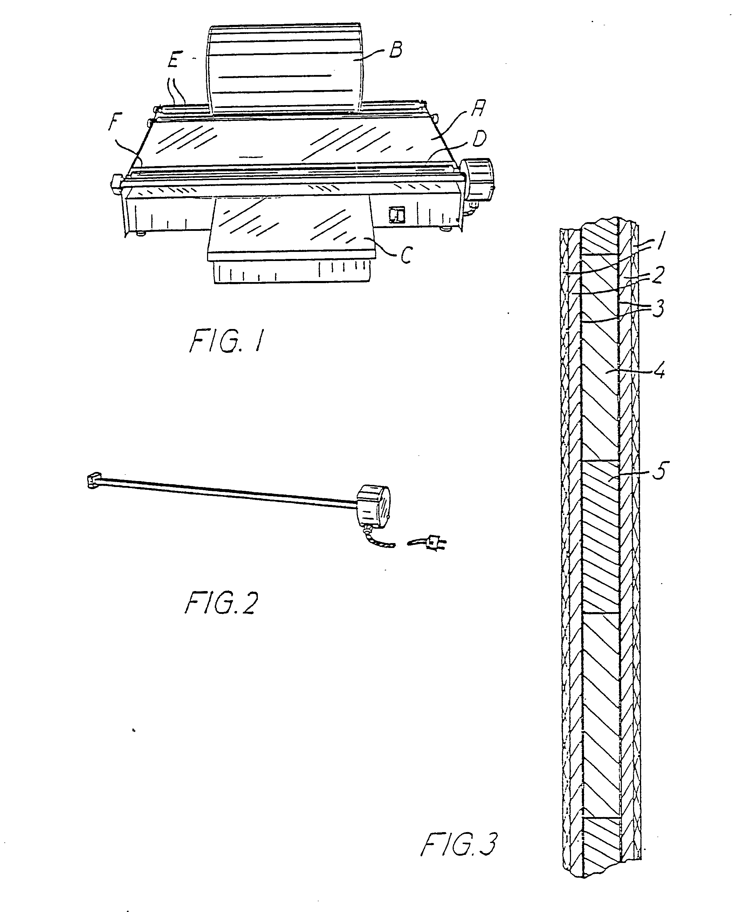

The packing table shown in Fig. 1 comprises a packing surface A provided, on its side turning away from the operator, with a supply roll B with the plastics foil to be used for wrapping up goods such as articles of food. The supply roll B rests on two rollers E extending across the width of the packing table, and the free end of the foil is led down in front of the rollers E or between these and passes underneath the packing surface A until it reaches the front of said surface, where provision is made of an additional roller F over which the foil can be drawn up to the top side of the packing surface. The operator places the articles to be wrapped up on the packing surface A and then draws a suitable length of foil towards the front of the packing surface, over the roller F and over the article which is then taken from above and moved towards the operator onto a surface C which may possibly be a heat plate, if the foil is of the shrinking type. During this last-mentioned movement of the article now surrounded by the foil, the plastics foil is brought into contact with a heating rod D extending transversely to the table in front of the roller F, the temperature of said heating rod D being such that the plastics material is decomposed in the area of contact with the rod, whereby the wrapped article is separated from the supply of wrapping material.

The heating rod D is shown dismounted and with a current supply wire in Fig. 2, and a longitudinal section of a central part of the heating rod is shown in Fig. 3.

In the embodiment shown, the heating rod D comprises a tubular envelope 1 which may be of aluminium or any other heat resistant material and may have a triangular, circular or rectangular profile. On the inside of the envelope 1, provision is made of an insulating layer 2 which may be an extruded silicone rubber profile inserted in the envelope 1.

On opposite sides, electric conductors 3 are inserted in the rubber profile, which conductors may be aluminium or brass foil strips extending along the whole length of the heating rod and being insulated from each other. These conductors 3 are connected each to one pole of the electric feed voltage source (not shown), e.g. via a wire with a plug as shown in Fig. 2.

Between the electric conductors 3 and in contact therewith, heating elements 5 of PTC material are inserted in the heating rod, said elements being, in the embodiment shown, kept at a distance from each other by means of insulating spacers 4 which may be made of silicone rubber and are practically filling up the intervals between the PTC elements. In principle, the heating rod could also be filled up with PTC material, the electric conductors 3 and the insulating spacers 4 being then superfluous. The number of PTC heating elements 5 per unit of length or the degree of filling of the heating rod depends on the Curie temperature of the PTC material and of the desired surface temperature of the heating rod. If the Curie temperature of the PTC material corresponds practically to the desired cutting temperature determined by the plastics foil material, the heating rod can be filled up with this PTC material, and if the Curie temperature is higher than the desired cutting temperature, the degree of filling of the heating rod is chosen proportionally lower, which can take place by inserting two or more smaller PTC elements at a suitable distance from each other in the heating rod, for instance as shown in Fig. 3.

When the packing table whereon the heating rod is mounted, for instance as shown in Fig. 1, is to be used, the heating rod D is connected to the feed voltage, e.g. via an electric wire as shown in Fig. 2, and the rod will very quickly reach the desired surface temperature at which the plastics used as wrapping material is just decomposed but not burnt. By choosing the PTC material and the degree of filling of the heating rod with said material as explained in the previous paragraph, the heating rod is so dimensioned as to produce this surface temperature depending on the wrapping material used.

As a consequence of the above-mentioned special properties of the PTC material, the desired surface temperature of the heating rod will be reached but not exceeded to an appreciable extent, so that even after an operative break where no cutting and thus no cooling of the heating rod has taken place, the wrapping foil will be cut solely by decomposition of the plastics material but without combustion of said material and consequently, without formation of unpleasant and possibly injurious vapours and gases, and without production of ashes. A packing table according to the invention is thus extremely cleanly in use, because the cutting of the plastics foil produces no waste at all, and even very severe sanitary regulations as those imposed in particular by the veterinary services for the packing of articles of food may be met safely and without difficulty. Further adjustment of control of the temperature beyond that resulting from the self-adjustment of the PTC material at the Curie temperature is not necessary, and consequently, the invention provides a tear-off edge of very simple construction, working in a safe and reliable manner and requiring practically no maintenance.

**Claims**

1. A packing machine such as a packing table for wrapping up goods in a plastics foil taken off from a supply, and where provision is made of a heatable tear-off edge in the form of a heating rod having a heating body and temperature control means for separating from the supply, by thermal action on the foil, a piece of foil to be used for the wrapping, characterized in that the temperature control means are provided by the heating body proper including PTC-elements forming it or being inserted thereinto.

2. A packing machine as claimed in claim 1, characterized in that the tear-off edge is provided on a tubular, preferably triangular, circular or rectangular profile (D) in which are inserted one or more PTC elements (5).

3. A packing machine as claimed in claim 1 or 2, characterized in that two or more PTC elements (5) are disposed at a distance from each other along the tear-off edge and connected in parallel to the feed voltage source via contact strips (3) disposed on either side of the PTC elements (5) and extending practically along the length of the tear-off edge.

## Revendications

1. Empaqueteuse telle qu'une table d'empaquetage pour emballer des articles dans une feuille en plastique prélevée d'une réserve, un rebord chauffable d'arrachage étant prévu sous forme d'une tige chauffable comportant un corps de chauffage et des moyens de commande de température pour permettre, par effet thermique sur la feuille, de séparer de la réserve un morceau de feuille à utiliser pour l'emballage, caractérisée en ce que les moyens de commande de température consistent en ce que le corps chauffant lui-même comprend des éléments CTP formant ce corps ou insérés dans ce corps.

2. Empaqueteuse selon la revendication 1, caractérisée en ce que le rebord d'arrachage est disposé sur un profilé tubulaire (D), de préférence triangulaire, circulaire ou rectangulaire, dans lequel un ou plusieurs éléments CTP (5) sont insérés.

3. Empaqueteuse selon la revendication 1 ou la revendication 2, caractérisée en ce que deux ou plus de deux éléments CTP (5) sont placés à distance l'un de l'autre le long du rebord d'arrachage et reliés en parallèle à la source de tension d'alimentation par l'intermédiaire de bandes de contact (3) disposées de chaque coté des éléments CTP (5) et s'étendant pratiquement sur la longueur du rebord d'arrachage.

## Patentansprüche

1. Verpackings machine, z.B. Verpackungstisch zum Einpacken von Gütern in einen Kunststoffilm, der einem Vorrat entnommen wird, wobei eine erhitzbare Abreisskante in der Form eines Heizstabes mit einem Heizkörper und Temperaturregelung vorgesehen ist zur Abtrennung eines Filmstückes zur Verwendung beim Einpacken von dem Vorrat durch thermische Einwirkung auf den Film, dadurch gekennzeichnet, dass die Temperaturregelung durch den Heizkörper selbst gebildet ist, der PTC-Elemente umfasst, die den Heizkörper bilden oder darin enthalten sind.

2. Verpackungsmaschine nach Anspruch 1, dadurch gekennzeichnet, dass die Abreisskante an einem rohrförmigen, vorzugsweise dreieckigen, kreisförmigen oder viereckigen Profil (D) vorgesehen ist, in dem ein oder mehrere PTC-Elemente (5) enthalten ist/sind.

3. Verpackungsmaschine nach Anspruch 1 oder 2, dadurch gekennzeichnet, dass zwei oder mehrere PTC-Elemente (5) mit gegenseitigem Abstand entlang der Abreisskante angeordnet und parallel über Kontaktstreifen (3) mit der Versorgungsspannung verbunden sind, welche Kontaktstreifen auf je einer Seite der PTC-Elemente (5) angeordnet sind und sich praktisch über die Länge der Abreisskante erstrecken.

# 0 049 290

**FIG. 1**

**FIG.2**

**FIG.3**